# EUROPÄISCHE PATENTANMELDUNG

(11) **EP 1 925 537 A1**
(43) Veröffentlichungstag der Anmeldung: **28.05.2008**
(21) Anmeldenummer: 07450204.8
(22) Anmeldetag: 22.11.2007
(51) Int. Cl.: B62D 33/023, B62D 33/02

(54) **Aufbau, insbesondere kippbarer Aufbau, für einen Anhänger sowie Anhänger**

(30) Priorität: 24.11.2006 AT 8272006 U
(71) Anmelder: Pongratz Trailer-Group GmbH, 8712 Proleb (AT)
(72) Erfinder: Pongratz, Herwig, 8712 Proleb (AT)
(74) Vertreter: Miksovsky, Alexander

(57) **Zusammenfassung**

Bei einem Aufbau (7), insbesondere kippbaren Aufbau, für einen Anhänger (1), wobei auf einem eine Mehrzahl von Trägern aufweisenden Rahmen (8) ein Boden (12) angeordnet ist und Begrenzungswände (11, 14) den Umfang des Bodens (12) wenigstens teilweise begrenzen, ist vorgesehen, daß an Eckbereichen des Bodens (12), an welchen Begrenzungswände (11, 14) vorgesehen bzw. angeordnet sind, der Rahmen mit Aufnahme- bzw. Festlegungselementen (9) für im wesentlichen vertikale Steher (10) zur Anlenkung bzw. Festlegung einer daran anschließenden Begrenzungswand (11, 14) ausgebildet ist, wodurch sich eine zuverlässige und paßgenaue Lagerung der Begrenzungswände (11, 14) erzielen läßt.

## Beschreibung

Die vorliegende Erfindung bezieht sich auf einen Aufbau, insbesondere kippbarer Aufbau, für einen Anhänger, wobei auf einem eine Mehrzahl von Trägern aufweisenden Rahmen ein Boden angeordnet ist und Begrenzungswände den Umfang des Bodens wenigstens teilweise begrenzen, sowie auf einen Anhänger, insbesondere Transportanhänger, mit einem derartigen Aufbau.

Im Zusammenhang mit einem Aufbau, insbesondere kippbaren Aufbau, für einen Anhänger ist es bekannt, einen Rahmen vorzusehen, welcher aus einer Mehrzahl von Trägern besteht, wobei auf diesen Rahmen ein Boden angeordnet ist. Darüber hinaus sind üblicherweise wenigstens teilweise Begrenzungswände vorgesehen, welche den Umfang des Bodens begrenzen bzw. abschließen, so daß zu transportierendes Gut, beispielsweise auch riesel- bzw. schüttfähiges Gut, auf dem Anhänger transportiert werden kann, falls insbesondere um sämtliche Umfangskanten des Aufbaus bzw. Bodens desselben entsprechende Begrenzungswände vorgesehen sind. Bei bekannten Ausführungsformen ist vorgesehen, daß der Boden beispielsweise über entsprechende Verschraubungen am Rahmen festgelegt wird, wobei üblicherweise wenigstens im Bereich einiger Umfangsränder bzw. -kanten des Bodens ein Abkanten bzw. eine Ausbildung eines Flansches vorgenommen wird. Darüber hinaus sind zur Halterung bzw. Festlegung der Begrenzungswände im wesentlichen vertikale Steher vorzusehen, welche bei bekannten Ausführungsformen unmittelbar am Boden festgelegt bzw. angeordnet werden. Insbesondere unter Berücksichtigung der Tatsache, daß der Boden üblicherweise eine vergleichsweise große Fläche aufweist und gegebenenfalls während des Abkantungsprozesses bzw. der Ausbildung der nach unten ragenden Flansche nicht in überaus engen Toleranzen bearbeitet werden kann, ist die Anordnung der im wesentlichen vertikalen Steher für die weitere Aufnahme bzw. Festlegung von Begrenzungswänden ebenfalls nicht ohne weiteres innerhalb enger Abmessungstoleranzen möglich, so daß sich bei bekannten Ausführungsformen Schwierigkeiten bei der nachfolgenden Anordnung bzw. Festlegung von Begrenzungswänden aufgrund der fehlenden Möglichkeiten der Einhaltung enger Abmessungstoleranzen insbesondere für die Anordnung bzw. Festlegung der vertikalen Steher ergeben.

Die vorliegende Erfindung zielt daher darauf ab, einen Aufbau der eingangs genannten Art sowie einen damit versehenen Anhänger zur Verfügung zu stellen, bei welchem eine exakte und paßgenaue Festlegung von vertikalen Stehern für eine nachfolgende Festlegung bzw. Anbringung von Begrenzungswänden des Aufbaus und insbesondere bei einfacher Festlegbarkeit bzw. Bearbeitbarkeit des Bodens möglich wird, welcher nicht eine übermäßig genaue Einhaltung von Abmessungstoleranzen erfordert.

Zur Lösung dieser Aufgabe ist ein Aufbau, insbesondere kippbarer Aufbau, für einen Anhänger der eingangs genannten Art im wesentlichen dadurch gekennzeichnet, daß an Eckbereichen des Bodens, an welchen Begrenzungswände vorgesehen bzw. angeordnet sind, der Rahmen mit Aufnahme- bzw. Festlegungselementen für im wesentlichen vertikale Steher zur Anlenkung bzw. Festlegung einer daran anschließenden Begrenzungswand ausgebildet ist. Dadurch, daß erfindungsgemäß vorgesehen ist, am Rahmen Aufnahme- bzw. Festlegungselemente für im wesentlichen vertikale Steher zur Anlenkung bzw. Festlegung einer daran anschließenden Begrenzungswand auszubilden bzw. vorzusehen, wird sichergestellt, daß eine exakte und paßgenaue Positionierung derartiger Aufnahme- bzw. Festlegungselemente für vertikale Steher an dem üblicherweise entsprechend massiv ausgebildeten Rahmen möglich wird, so daß erforderliche Paßgenauigkeiten bzw. Abmessungstoleranzen für die Anordnung der Steher und eine nachfolgende Anordnung bzw. Festlegung von Begrenzungswänden unabhängig von der Größe des Bodens und/oder einer vorzunehmenden Bearbeitung erhalten bzw. eingehalten werden können. Derartige Aufnahme- bzw. Festlegungselemente können von zapfen- bzw. rohrförmigen Elementen gebildet sein, welche mit vertikalen Steher zusammenwirken bzw. an welchen derartige vertikale Steher in einfacher Weise festlegbar bzw. anordenbar sind. Gegebenenfalls können derartige Aufnahme- bzw. Festlegungselemente auch aus flanschartigen und einen Steher gegebenenfalls lediglich teilweise umgebenden Trägerelementen gebildet sind, an welchen eine zuverlässig und insbesondere paßgenaue Festlegung der vertikalen Steher vorgenommen werden kann.

Zur Ausbildung von Begrenzungswänden, welche den gesamten Umfang des im wesentlichen rechteckigen bzw. rechtwinkeligen Bodens umschließen, ist gemäß einer bevorzugten Ausführungsform vorgesehen, daß der Rahmen an sämtlichen Ecken des im wesentlichen rechteckigen Bodens mit Aufnahme- bzw. Festlegungselementen für Steher ausgebildet ist.

Wie oben bereits angedeutet, können die Aufnahme- bzw. Festlegungselemente von unterschiedlichen Ausbildungen von mit den vertikalen Stehern zusammenwirkenden Elementen gebildet sein, wobei erfindungsgemäß gemäß einer bevorzugten Ausführungsform vorgeschlagen wird, daß die Aufnahme- bzw. Festlegungselemente aus rohrförmigen Elementen gebildet sind, in welchen jeweils ein vertikaler Steher einpaßbar und darin festlegbar, insbesondere verschwenkbar, ist. Derartige rohrförmige Elemente lassen sich zuverlässig und entsprechend den einzuhaltenden Maßgenauigkeiten an dem stabil ausgebildeten Rahmen festlegen, so daß in weiterer Folge damit zusammenwirkende, vertikale Steher ebenfalls innerhalb enger Abmessungstoleranzen angeordnet bzw. festgelegt, beispielsweise insbesondere verschweißt, werden können.

Für eine besonders einfache und zuverlässige Kopplung zwischen den Aufnahme- bzw. Festlegungselementen und daran anzuordnenden bzw. festzulegenden, vertikalen Stehern ist gemäß einer weiters bevorzugten Ausführungsform vorgesehen, daß die Kontur eines Aufnahme- bzw. Festlegungselements an eine komplementäre Kontur eines aufzunehmenden bzw. daran festzulegenden, vertikalen Stehers angepaßt ist.

Um gegebenenfalls bestehende Trägerelemente bzw. Rahmenkonstruktionen für einen erfindungsgemäßen Aufbau im wesentlichen unverändert verwenden zu können, wird darüber hinaus vorgeschlagen, daß der Rahmen von einer Mehrzahl von Längs- und Querträgern gebildet ist und daß an einander gegenüberliegenden Enden des Rahmens, insbesondere am in einer Festlegung des Aufbaus an einem Fahrwerk vorderen und hinteren Ende, ein zusätzlicher Träger vorgesehen ist, an dessen Ende entsprechend den Ecken des auf dem Rahmen festzulegenden Bodens jeweils ein Aufnahme- bzw. Festlegungselement vorgesehen bzw. ausgebildet ist, wie dies einer weiters bevorzugten Ausführungsform des erfindungsgemäßen Aufbaus für einen Anhänger entspricht. Derartige zusätzliche Träger können wiederum entsprechend paßgenau beispielsweise an einer bereits bestehenden Rahmenkonstruktion festgelegt werden.

Um ein einfaches Be- bzw. Entladen des erfindungsgemäßen Aufbaus zu ermöglichen, ist darüber hinaus gemäß einer weiters bevorzugten Ausführungsform vorgesehen, daß in an sich bekannter Weise wenigstens eine Begrenzungswand schwenkbar an jeweils zwei benachbarten, vertikalen Stehern angelenkt ist.

In diesem Zusammenhang wird gemäß einer weiters bevorzugten Ausführungsform vorgeschlagen, daß eine schwenkbare Festlegung der Begrenzungswand an zwei benachbarten Stehern in an sich bekannter Weise über am von der Bodenfläche abgewandten Ende der Steher angeordnete Schwenkzapfen erfolgt, so daß beispielsweise bei einem Kippen des erfindungsgemäßen Aufbaus durch ein Verschwenken der Begrenzungswand an Schwenkzapfen, welche am von der Bodenfläche abgewandten Ende an den vertikalen Stehern angelenkt sind, ein beispielsweise schütt- bzw. rieselfähiges Transportgut einfach von dem Aufbau ausgebracht werden kann, wobei beispielsweise ein einfaches Lösen der entsprechenden Begrenzungswand von einer Arretierungsposition erforderlich ist.

Für ein einfaches Be- bzw. Entladen des erfindungsgemäßen Aufbaus eines Anhängers ist darüber hinaus gemäß einer bevorzugten Ausführungsform vorgesehen, daß wenigstens eine Begrenzungswand schwenkbar am Boden angelenkt ist und in aufgerichteter Stellung in an sich bekannter Weise an jeweils zwei benachbarten, vertikalen Stehern lösbar festlegbar ist.

Wie oben bereits angedeutet, findet insbesondere zur Erhöhung der Festigkeit der Bodenfläche wenigstens teilweise ein Abkanten bzw. Ausbilden von Flanschen statt, wobei in diesem Zusammenhang gemäß einer weiters bevorzugten Ausführungsform vorgesehen ist, daß der Boden an zwei einander gegenüberliegenden Seitenrändern, insbesondere den in Längsrichtung verlaufenden Rändern, in auf dem Rahmen angeordnetem Zustand mit nach unten abgewinkelten Flanschen bzw. Endabschnitten ausgebildet ist. Unter Berücksichtigung der Tatsache, daß die vertikalen Steher des erfindungsgemäßen Aufbaus direkt an Aufnahme- bzw. Festlegungselemente, welche mit dem Rahmen verbunden sind bzw. an diesem angeordnet sind, gekoppelt sind, kann somit mit einer Bodenfläche das Auslangen gefunden werden, welche nicht die für die präzise Anordnung der vertikalen Steher erforderliche Paßgenauigkeit bzw. geringen Abmessungstoleranzen aufweist. Darüber hinaus muß die Bodenfläche des erfindungsgemäßen Aufbaus auch nicht eine überaus große Festigkeit bzw. Steifigkeit aufweisen, welche für die Aufnahme bzw. Lagerung der vertikalen Steher, welche in weiterer Folge die Begrenzungswände abstützen bzw. an welchen die Begrenzungswände festgelegt sind, gefordert wird, so daß insgesamt mit einer einfacheren Konstruktion der Bodenfläche das Auslangen gefunden werden kann, da derartige, durch die vertikalen Steher abzustützenden Kräfte bzw. Belastungen direkt über die am Rahmen angeordneten Aufnahme- bzw. Befestigungselemente in einen eine entsprechend stabile Konstruktion aufweisenden Rahmen eingeleitet werden. Ein derart einfach ausgebildeter Boden mit lediglich insbesondere an den Längsrichtungen vorgesehenen Abkantungen bzw. Flanschen wird beispielsweise durch einfache Verschraubung am Rahmen festgelegt.

Für ein einfaches Kippen bzw. Verschwenken des Aufbaus ist darüber hinaus erfindungsgemäß bevorzugt vorgesehen, daß am Rahmen in an sich bekannter Weise eine Anlenkstelle für einen Kipp- bzw. Hebemechanismus, insbesondere ein hydraulisches Zylinderkolbenaggregat, für ein Kippen des Aufbaus vorgesehen ist.

Zur Lösung der eingangs genannten Aufgaben wird erfindungsgemäß darüber hinaus ein Anhänger, insbesondere Transportanhänger, zur Verfügung gestellt, bei welchem ein erfindungsgemäßer Aufbau der obengenannten Art an einem Fahrwerk schwenkbar bzw. kippbar festgelegt ist.

Die Erfindung wird nachfolgend anhand von in der beiliegenden Zeichnung schematisch dargestellten Ausführungsbeispielen näher erläutert. In dieser zeigen:
Fig. 1 eine schematische Seitenansicht eines erfindungsgemäßen Anhängers mit einem erfindungsgemäßen Aufbau in einer wenigstens teilweise gekippten Lage;
Fig. 2 eine Draufsicht auf einen Rahmen eines erfindungsgemäßen Aufbaus;
Fig. 3 eine schematische Draufsicht auf eine Bodenfläche eines erfindungsgemäßen Aufbaus; und
Fig. 4 eine schematische Teilansicht in vergrößertem Maßstab im Bereich der Festlegung bzw. Anordnung eines vertikalen Stehers am Rahmen des erfindungsgemäßen Aufbaus.

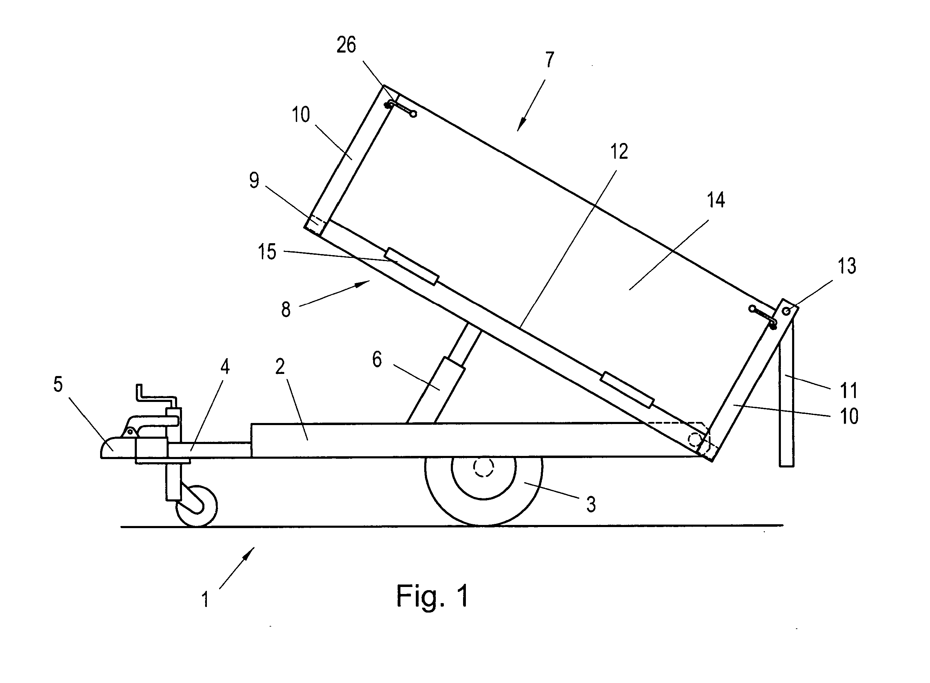

In Fig. 1 ist allgemein mit 1 ein Anhänger bezeichnet, welcher ein schematisch mit 2 angedeutetes Fahrwerk aufweist, an welchem ein Rad 3 festgelegt ist. Darüber hinaus ist eine Deichsel 4 mit einer Festlegungsvorrichtung 5 für eine Kopplung mit einem nicht näher dargestellten Zugfahrzeug angedeutet.

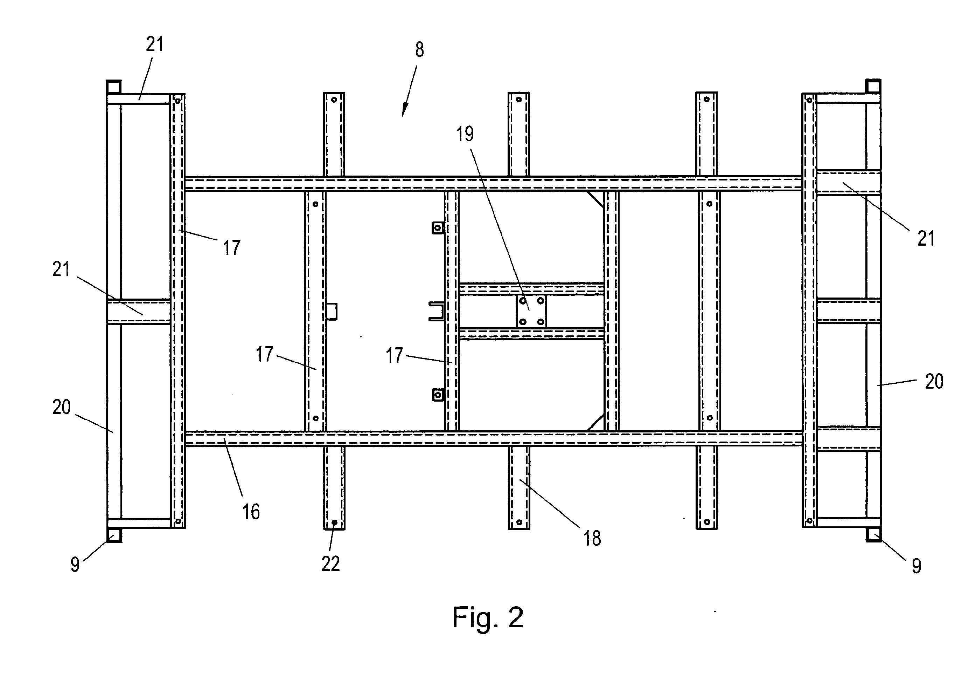

Am Fahrwerk 2 ist über einen Schwenkmechanismus, beispielsweise ein hydraulisches Zylinderkolbenaggregat 6, ein allgemein mit 7 bezeichneter Aufbau schwenkbar festgelegt, wobei, wie dies aus den nachfolgenden Figuren noch deutlicher ersichtlich werden wird, das Zylinderkolbenaggregat 6 an einem schematisch mit 8 angedeuteten Rahmen des Aufbaus 7 angelenkt ist, welcher in Fig. 2 im Detail dargestellt ist.

Am Rahmen 8 sind über Aufnahme- bzw. Festlegungselemente 9, welche ebenfalls in den nachfolgenden Figuren im Detail dargestellt werden, vertikale Steher 10 festgelegt, welche an den Ecken des Aufbaus 7 vorgesehen sind. Zwischen jeweils benachbarten, vertikalen Stehern ist bei der in Fig. 1 dargestellten Ausführungsform an einer hinteren Begrenzungsfläche des Aufbaus 7 eine schwenkbare Begrenzungswand 11 vorgesehen, welche an den jeweiligen Stehern 10 über am von der Bodenfläche 12 abgewandten Ende angeordnete Schwenkzapfen 13 verschwenkbar ist, um beispielsweise in der in Fig. 1 dargestellten, wenigstens teilweise hochgeschwenkten bzw. gekippten Lage des Aufbaus 7 beispielsweise stückiges bzw. rieselfähiges, im Anhänger bzw. Aufbau 7 aufgenommenes Material auszubringen.

Darüber hinaus sind insbesondere an den Längswänden des Aufbaus 7 zusätzliche Begrenzungswände 14 vorgesehen, welche beispielsweise über schematisch mit 15 angedeutete Anlenkstellen, wie beispielsweise Scharniere oder Gelenke, in eine heruntergeklappte Lage verschwenkbar sind, um ein einfaches Be- und Entladen des Anhängers bzw. des Aufbaus 7 zu erlauben, wobei die Festlegung bzw. Arretierung einer derartigen schwenkbaren Festlegungswand 14 an benachbarten, vertikalen Stehern 10 über schematisch mit 26 angedeutete Verriegelungseinrichtungen erfolgt.

Bei der in Fig. 2 dargestellten Draufsicht auf den Rahmen 8 ist ersichtlich, daß neben zwei im wesentlichen in Längsrichtung verlaufenden Längsträgern 16 eine Mehrzahl von Querträgern 17 bzw. 18 vorgesehen ist, um eine entsprechend stabile Rahmenkonstruktion zur Verfügung zu stellen. Darüber hinaus ist eine Anlenkstelle 19 für den Schwenk- bzw. Hebemechanismus, beispielsweise das hydraulische Zylinderkolbenaggregat, angedeutet.

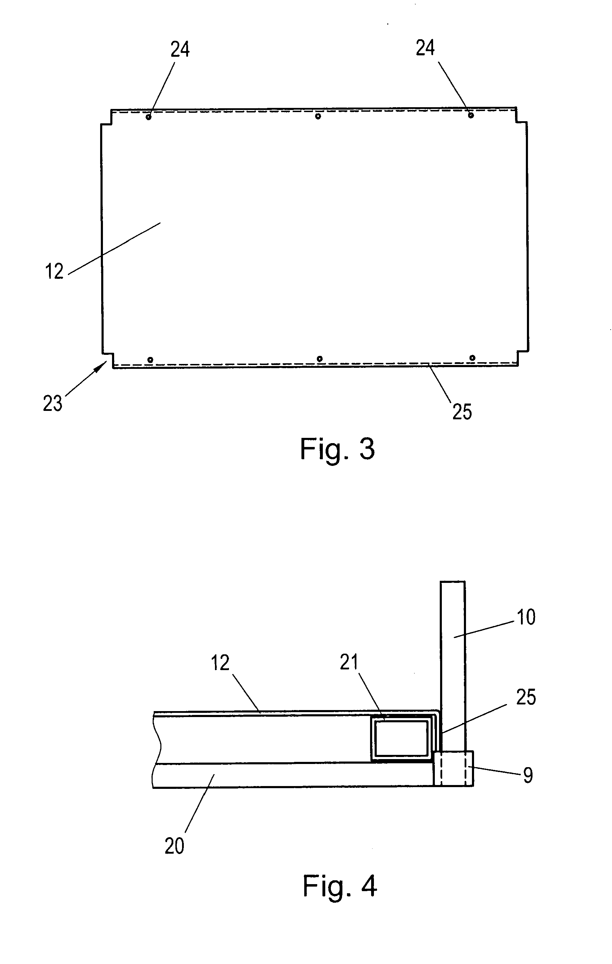

Neben der Mehrzahl von Längs- und Querträgern 16, 17 und 18, welche insbesondere zur zuverlässigen Lagerung der in Fig. 3 dargestellten Bodenfläche 12 dienen, ist darüber hinaus an dem vorderen und hinteren Ende jeweils ein zusätzlicher Träger 20 vorgesehen, wobei die Träger 20 jeweils an ihren Endbereichen die wiederum mit 9 bezeichneten Aufnahme- bzw. Festlegungselemente für die vertikalen Steher 10 aufweisen. Die Aufnahme- bzw. Festlegungselemente 9 können beispielsweise von entsprechenden stift- bzw. zapfenförmigen oder rohrförmigen Elementen gebildet sein, wobei für eine besonders einfache und zuverlässige Festlegung der daran bzw. darin festzulegenden bzw. anzuordnenden, vertikalen Steher 10 insbesondere die Konturen eines derartigen Aufnahme- bzw. Festlegungselements 9 an komplementäre Konturen eines daran festzulegenden, vertikalen Stehers 10 angepaßt sind.

Bei der in Fig. 2 dargestellten Ausführungsform sind die Aufnahme- bzw. Festlegungselemente 9 aus rohrförmigen, insbesondere rechtwinkeligen Elementen gebildet, in welche ein vertikaler Steher 10 in einfacher Weise einpaßbar und beispielsweise daran durch Verschweißen festlegbar ist, wie dies insbesondere unter Bezugnahme auf Fig. 4 noch im Detail erörtert werden wird.

Im Bereich der zusätzlichen Träger 20 sind darüber hinaus ergänzende Auflage- bzw. Verstärkungsprofile 21 angedeutet, welche eine exakte und zuverlässige Positionierung der Aufnahmeelemente 9 sicherstellen.

Darüber hinaus sind in Fig. 2 Festlegungsstellen, beispielsweise Bohrungen 22, für die daran festzulegende Bodenfläche 12 angedeutet.

Die Außenkontur einer auf einer Rahmenkonstruktion gemäß Fig. 2 festzulegenden Bodenfläche 12 ist in der Draufsicht gemäß Fig. 3 dargestellt, wobei ersichtlich ist, daß in den Eckbereichen 23, wo in weiterer Folge die vertikalen Steher 10 anzuordnen sind, entsprechend ausgenommene Bereiche existieren, welche auf die Positionierung der an dem Rahmen 8 bzw. insbesondere den zusätzlichen Trägern 20 vorzusehenden Aufnahme- bzw. Festlegungselementen 9 abgestimmt sind. Festlegungsstellen der Bodenplatte bzw. Bodenfläche 12 an dem darunterliegenden Rahmen sind in Fig. 3 mit 24 angedeutet, wobei die Festlegung in einfacher Weise über Verschraubungen vorgenommen werden kann.

Bei der teilweisen, detaillierten Darstellung gemäß Fig. 4 ist ersichtlich, daß in das im wesentlichen rohrförmige Aufnahme- bzw. Festlegungselement 9 ein vertikaler Steher 10 beispielsweise eingeschoben wird und für eine zuverlässige Festlegung daran verschweißt wird. Das rohrförmige Aufnahme- bzw. Festlegungselement 9 ist an dem wiederum mit 20 bezeichneten, zusätzlichen Träger der Rahmenkonstruktion bzw. des Rahmens 8 festgelegt, wobei in der schematischen und teilweisen Darstellung von Fig. 4 das Abstützprofil für die Bodenfläche 12 wiederum mit 21 bezeichnet ist.

Ergänzend ist in Fig. 4 ersichtlich, daß die Bodenfläche 12 in ihrem Rahmen- bzw. Kantenbereich mit einem abgekanteten Ende bzw. Flansch 25 versehen ist, welches(r) zur Erhöhung der Steifigkeit der Bodenfläche bzw. des Bodens 12 beiträgt, wobei diese Abkantung bzw. der Flansch 25 an den in Längsrichtung verlaufenden Rändern des Bodens 12 vorgesehen ist.

Durch die unmittelbare Anordnung der Aufnahme- bzw. Festlegungselemente 9 für die vertikalen Steher 10 am Rahmen 8 wird ermöglicht, daß die Anforderungen hinsichtlich der Abmessungstoleranzen des Bodens 12 verringert werden können, da die exakte und zuverlässige Positionierung der vertikalen Steher 10 über die direkt an der entsprechend stabilen Rahmenkonstruktion 8 festgelegten Aufnahme- bzw. Festlegungselemente 9 definiert wird. Darüber hinaus können gegebenenfalls über die Begrenzungswände 11 bzw. 14 auf die vertikalen Steher 10 eingebrachten Kräfte zuverlässig unmittelbar in den Rahmen 8 eingeleitet werden, so daß die Anforderungen an den Boden 12 hinsichtlich der Stabilität bzw. Festigkeit entsprechend verringert werden können.

## Patentansprüche

1. Aufbau (7), insbesondere kippbarer Aufbau, für einen Anhänger (1), wobei auf einem eine Mehrzahl von Trägern aufweisenden Rahmen (8) ein Boden (12) angeordnet ist und Begrenzungswände (11, 14) den Umfang des Bodens (12) wenigstens teilweise begrenzen, **dadurch gekennzeichnet, daß** an Eckbereichen (23) des Bodens (12), an welchen Begrenzungswände (11, 14) vorgesehen bzw. angeordnet sind, der Rahmen (8) mit Aufnahme- bzw. Festlegungselementen (9) für im wesentlichen vertikale Steher (10) zur Anlenkung bzw. Festlegung einer daran anschließenden Begrenzungswand (11, 14) ausgebildet ist.

2. Aufbau nach Anspruch 1, **dadurch gekennzeichnet, daß** der Rahmen (8) an sämtlichen Ecken (23) des im wesentlichen rechteckigen Bodens (12) mit Aufnahme- bzw. Festlegungselementen (9) für Steher (10) ausgebildet ist.

3. Aufbau nach Anspruch 1 oder 2, **dadurch gekennzeichnet, daß** die Aufnahme- bzw. Festlegungselemente (9) aus rohrförmigen Elementen gebildet sind, in welchen jeweils ein vertikaler Steher (10) einpaßbar und darin festlegbar, insbesondere verschwenkbar, ist.

4. Aufbau nach Anspruch 1, 2 oder 3, **dadurch gekennzeichnet, daß** die Kontur eines Aufnahme- bzw. Festlegungselements an eine komplementäre Kontur eines aufzunehmenden bzw. daran festzulegenden, vertikalen Stehers (10) angepaßt ist.

5. Aufbau nach einem der Ansprüche 1 bis 4, **dadurch gekennzeichnet, daß** der Rahmen (8) von einer Mehrzahl von Längs- und Querträgern (16, 17, 18) gebildet ist und daß an einander gegenüberliegenden Enden des Rahmens (8), insbesondere am in einer Festlegung des Aufbaus an einem Fahrwerk vorderen und hinteren Ende, ein zusätzlicher Träger (20) vorgesehen ist, an dessen Ende entsprechend den Ecken (23) des auf dem Rahmen festzulegenden Bodens (12) jeweils ein Aufnahme- bzw. Festlegungselement (9) vorgesehen bzw. ausgebildet ist.

6. Aufbau nach einem der Ansprüche 1 bis 5, **dadurch gekennzeichnet, daß** in an sich bekannter Weise wenigstens eine Begrenzungswand (11, 14) schwenkbar an jeweils zwei benachbarten, vertikalen Stehern (10) angelenkt ist.

7. Aufbau nach Anspruch 6, **dadurch gekennzeichnet, daß** eine schwenkbare Festlegung der Begrenzungswand (11) an zwei benachbarten Stehern in an sich bekannter Weise über am von der Bodenfläche (12) abgewandten Ende der Steher (10) angeordnete Schwenkzapfen (13) erfolgt.

8. Aufbau nach einem der Ansprüche 1 bis 7, **dadurch gekennzeichnet, daß** wenigstens eine Begrenzungswand (14) schwenkbar am Boden (12) angelenkt ist und in aufgerichteter Stellung in an sich bekannter Weise an jeweils zwei benachbarten, vertikalen Stehern (10) lösbar festlegbar ist.

9. Aufbau nach einem der Ansprüche 1 bis 8, **dadurch gekennzeichnet, daß** der Boden (12) an zwei einander gegenüberliegenden Seitenrändern, insbesondere den in Längsrichtung verlaufenden Rändern, in auf dem Rahmen angeordnetem Zustand mit nach unten abgewinkelten Flanschen bzw. Endabschnitten (25) ausgebildet ist.

10. Aufbau nach einem der Ansprüche 1 bis 9, **dadurch gekennzeichnet, daß** am Rahmen in an sich bekannter Weise eine Anlenkstelle (9) für einen Kipp- bzw. Hebemechanismus (6), insbesondere ein hydraulisches Zylinderkolbenaggregat, für ein Kippen des Aufbaus (7) vorgesehen ist.

11. Anhänger (1), insbesondere Transportanhänger, bei welchem ein Aufbau nach einem der Ansprüche 1 bis 10 auf einem Fahrwerk (2) schwenkbar festlegbar ist.
